(19) **Europäisches Patentamt**
**European Patent Office**
**Office européen des brevets**

(11) **EP 2 285 813 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(51) Int Cl.:
***C07F 7/18*** (2006.01)

(21) Anmeldenummer: **09757355.4**

(86) Internationale Anmeldenummer:
**PCT/EP2009/054649**

(22) Anmeldetag: **20.04.2009**

(87) Internationale Veröffentlichungsnummer:
**WO 2009/146972 (10.12.2009 Gazette 2009/50)**

(54) **VERFAHREN ZUR AUFARBEITUNG SALZHALTIGER RÜCKSTÄNDE AUS DER HERSTELLUNG VON AMINOFUNKTIONELLEN ORGANOSILANEN**

METHOD FOR TREATING RESIDUES CONTAINING SALT, PRODUCED DURING THE PRODUCTION OF AMINO-FUNCTIONAL ORGANOSILANES

PROCÉDÉ DE RETRAITEMENT DE RÉSIDUS CONTENANT DES SELS, ISSUS DE LA PRÉPARATION D'ORGANOSILANES À FONCTION AMINO

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.06.2008 DE 102008002183**

(43) Veröffentlichungstag der Anmeldung:
**23.02.2011 Patentblatt 2011/08**

(73) Patentinhaber: **Evonik Degussa GmbH**
**45128 Essen (DE)**

(72) Erfinder:
• **ALBERT, Philipp**
**79539 Lörrach (DE)**
• **JUST, Eckhard**
**79618 Rheinfelden (DE)**

(56) Entgegenhaltungen:
**EP-A- 1 111 002      DE-A1- 4 130 643**
**DE-A1- 10 140 563     US-A- 4 526 996**

**Beschreibung**

Die vorliegende Erfindung betrifft ein neues Verfahren zur Aufarbeitung salzhaltiger Rückstände, wie sie bei der Herstellung eines aminofunktionellen Organosilans durch Umsetzung eines halogenfunktionellen Organosilans mit überschüssigem Ammoniak oder einem organischen Amin anfallen. Weiter betrifft die Erfindung spezielle bis- und tris-aminofunktionelle Organosilane enthaltende Zusammensetzungen und deren Verwendung. Aminofunktionelle Organosilane werden nachfolgend auch kurz als Aminosilane bezeichnet. Ferner wird ein Ammoniumhalogenid und/oder organische Aminhydrohalogenide enthaltender Rückstand, wie er bei der Herstellung von aminofunktionellen Organosilanen durch Umsetzung eines halogenfunktionellen Organosilans mit Ammoniak oder einem organischen Amin anfällt, hier und nachfolgend auch kurz als salzhaltiger Rückstand oder noch kürzer als Rückstand bezeichnet.

Aminosilane haben ein vielfältiges Anwendungsspektrum. Sie werden beispielsweise für Glasfaserschlichten verwendet oder in der Gießereiindustrie als Verarbeitungshilfsstoffe eingesetzt, ebenfalls dienen sie als Haftvermittler für lagerungsstabile Harze.

Es ist lange bekannt, aminofunktionelle Organosilane insbesondere aus chlorfunktionellen Organosilanen und Ammoniak oder organischen Aminen herzustellen, dabei sind das gebildete Ammoniumchlorid oder das gebildete organische Aminhydrochlorid abzutrennen (DE-PS 10 23 462, DE-PS 27 49 316, DE-PS 27 53 124, EP 0 702 017 A2, EP 0 741 137 A2, EP 0 849 271 A2, EP 1 295 889 A2).

In EP 1 262 484 A2, EP 1 209 162 A2 und DE 101 40 563 A1 wird derart verfahren, dass man das Herstellverfahren über verschiedene Druckstufen ablaufen lässt, wodurch u. a. die Folgen aus der Problematik von Salzanbackungen gemindert werden konnten.

Den Verfahren zur Herstellung von aminofunktionellen Organosilanen durch Umsetzung entsprechender halogenorganofunktioneller Silane mit Ammoniak oder einem Amin ist gemeinsam, dass dabei salzhaltige Rückstände anfallen, die in der Regel zu entsorgen sind. Besagte Rückstände können beispielsweise Ammoniumchlorid, 3-Aminopropyltriethoxysilan-Hydrochlorid (so genanntes AMEO-Hydrochlorid) sowie Bis-AMEO-Hydrochlorid bzw. Tris-AMEO-Hydrochlorid, gegebenenfalls entsprechende hydrolysebedingte Disiloxane, usw. enthalten. Die Suche nach einer Verwertung für solche Reststoffe scheitert in der Regel an dem hohen Chloridgehalt der Rückstände.

Der vorliegenden Erfindung lag daher die Aufgabe zugrunde, eine weitere Möglichkeit einer Wert schöpfenden Aufarbeitung bei der Herstellung von aminofunktionellen Organosilanen zu finden. Ein besonderes Anliegen bestand darin, salzhaltige Rückstände aus der Herstellung von aminofunktionellen Organosilanen einer wirtschaftlichen Nutzung zuzuführen.

Die gestellte Aufgabe wird erfindungsgemäß entsprechend den Angaben der Patentansprüche gelöst.

Überraschenderweise wurde gefunden, dass man Hydrochloride aus Aminosilanen mit einer stark alkalischen, wässrigen Lösung aufarbeiten kann, ohne vorliegendes Aminioalkoxysilan einer nennenswerten Menge zu hydrolysieren. Das vorliegende Verfahren ist allgemein auf alle aminofunktionellen Organosilane vorteilhaft anwendbar. Insbesondere konnte dadurch eine einfache und wirtschaftliche Möglichkeit zur Wert schöpfenden Aufarbeitung eines Rückstands aus einer Aminosilansynthese, insbesondere eines Rückstands aus der Destillation einer Aminosilansynthese, vorteilhaft bereitgestellt werden.

So wurde in überraschender Weise gefunden, dass man insbesondere einen Ammoniumhalogenide und/oder organische Aminhydrohalogenide enthaltenden Rückstand aus der Herstellung eines aminofunktionellen Organosilans, wobei die Herstellung auf der Umsetzung eines halogenfunktionellen, vorzugsweise chlorfunktionellen Organoalkoxysilans mit überschüssigem Ammoniak oder einem organischen Amin, vorzugsweise unter Druck sowie in flüssiger Phase, und anschließender Trennung sowie Aufarbeitung von Rohprodukt und anfallendem Salz basiert, in einfacher und wirtschaftlicher Weise aufarbeiten kann, indem man dem besagten Rückstand optional zunächst ein im Wesentlichen unpolares organisches Lösemittel zugibt, weiter eine starke, wässrige Lauge zusetzt, reagieren lässt - vorzugsweise wird dabei die Zeitspanne der Reaktion kontrolliert -, man anschließend nach der Ausbildung der zwei Phasen die wässrige Phase von der organischen Phase trennt, aus der organischen Phase das organische Lösemittel entfernt und die im Sumpf verbleibende organische Phase gewinnt. So erhält man in einfache und wirtschaftlicher Weise, vorteilhaft nach Filtration der organischen Phase, eine klare, in der Regel gelb bis tief orange gefärbte, hochwertige bis- und tris-aminofunktionelle Organosilane enthaltenden Zusammensetzung, die man für viele Anwendungsfälle an Stelle von unverbrückten aminofunktionellen Organosilanen vorteilhaft mit hoher Wertschöpfung einsetzen kann. Darüber hinaus weist eine solche nach dem erfindungsgemäßen Verfahren erhaltene Zusammensetzung vorteilhaft einen Gehalt an hydrolysierbarem Chlorid von weniger als 100 Gew.-ppm bis hin zur Nachweisgrenze von 6 Gew.-ppm auf. Beispiele für hydrolysierbares Chlorid sind u. a. organische Aminhydrochloride, Ammoniumchloride, Chlorsilane usw. Die Bestimmung von hydrolysierbarem Chlorid kann beispielsweise potentiografisch mit Silbernitrat erfolgen.

Unter bis- bzw. tris-aminofunktionellen Organosilanen (nachfolgend auch als bissowie tris-silylierte Amine bezeichnet), die bei der oben genannten Herstellung von aminofunktionellen Organosilanen als Nebenprodukte anfallen, werden in der Regel verbrückte Aminosilane verstanden. Für besagte aminofunktionelle Organosilane werden beispielhaft die nachfolgenden allgemeinen Formeln angeführt.

Unverbrückte aminofunktionelle Organosilane, d. h. monosilylierte Amine, können durch die allgemeine Formel (Ia) wiedergegeben werden:

$$R_2N[(CH_2)_2NH]_z(Z)Si(R'')_n(OR')_{3-n} \qquad (I),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 8 C-Atomen, wie Methyl, Ethyl, Propyl, Butyl, vorzugsweise Methyl, oder eine Aryl-Gruppe darstellt, Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n gleich 0, 1, 2 oder 3 ist, vorzugsweise 0, und z gleich 0, 1 oder 2 ist,

Bis-aminofunktionelle Organosilane, d. h. bis-silylierte Amine, können durch die allgemeine Formel Ib veranschaulicht werden:

$$(R'O)_{3-n}(R'')_nSi(Z)[NH(CH_2)_2]_yNR[(CH_2)_2NH]_z(Z)Si(R'')_n(OR')_{3-n} \qquad (Ib),$$

worin R für ein Wasserstoff (H) oder eine lineare oder verzweigte Alkyl-Gruppe mit 1 bis 4 C-Atomen steht, bevorzugt H oder n-Butyl, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 8 C-Atomen, wie Methyl, Ethyl, Propyl, Butyl, vorzugsweise Methyl, oder eine Aryl-Gruppe darstellt, Gruppen Z gleich oder verschieden sind und Z für eine bivalente Alkyl-Gruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n unabhängig gleich 0, 1, 2 oder 3 ist, vorzugsweise 0, und y sowie z unabhängig gleich 0, 1 oder 2 sind, vorzugsweise

$$(H_3CO)_3Si(CH_2)_3NH(CH_2)_3Si(OCH_3)_3 \qquad (Bis\text{-}AMMO),$$
$$(H_5C_2O)_3Si(CH_2)_3NH(CH_2)_3Si(OC_2H_5)_3 \qquad (Bis\text{-}AMEO),$$

Tris-aminofunktionelle Organosilane, d. h. tris-silylierte Amine, werden in der Regel durch die allgemeinen Formel (Ic) widergespiegelt:

$$[(R'O)_{3-n}(R'')_nSi(Z)[NH(CH_2)_2]_x]_3N \qquad (Ic),$$

worin Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' eine lineare oder verzweigte Alkyl-Gruppe mit 1 bis 4 C-Atomen, wie Methyl, Ethyl, Propyl, Butyl, vorzugsweise Methyl, oder eine Aryl-Gruppe darstellt, Gruppen Z gleich oder verschieden sind und Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, bevorzugt Propyl, n unabhängig gleich 0, 1, 2 oder 3 ist, vorzugsweise 0, und x unabhängig gleich 0, 1 oder 2 ist, vorzugsweise

$$[(H_3CO)_3Si(CH_2)_3]_3N \qquad (Tris\text{-}AMMO),$$
$$[(H_5C_2O)_3Si(CH_2)_3]_3N \qquad (Tris\text{-}AMEO).$$

Gegenstand der vorliegenden Erfindung ist somit ein Verfahren zur Aufarbeitung eines Ammoniumhalogenide und/oder organische Aminhydrohalogenide enthaltenden Rückstands aus der Herstellung eines aminofunktionellen Organosilans der allgemeinen Formel (Ia)

$$R_2N[(CH_2)_2NH]_z(Z)Si(R'')_n(OR')_{3-n} \qquad (Ia),$$

worin Gruppen R gleich oder verschieden sind und R für Wasserstoff (H) oder eine lineare oder verzweigte Alkyl-Gruppe mit 1 bis 4 C-Atomen steht, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' eine lineare oder verzweigte Alkyl-Gruppe mit 1 bis 8 C-Atomen oder eine Aryl-Gruppe darstellt, Z für eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ steht, n gleich 0, 1, 2 oder 3 und z gleich 0, 1 oder 2 sind,
wobei die Herstellung des aminofunktionellen Organosilans gemäß Formel (Ia) auf der Umsetzung eines halogenfunktionellen Organosilans der allgemeinen Formel (II)

$$X\text{-}Z\text{-}Si(R'')_n(OR')_{3-n} \qquad (II),$$

worin X für Cl, Br oder J steht, vorzugsweise Cl, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ darstellt, bevorzugt Propyl, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, bevorzugt Methyl oder Ethyl, Gruppen R'' gleich oder verschieden sind und R'' für eine lineare oder verzweigte Alkyl-Gruppe mit 1 bis 8 C-Atomen, wie Methyl, Ethyl, Propyl, Butyl, vorzugsweise Methyl, oder eine Aryl-Gruppe steht, und n gleich 0, 1, 2 oder 3 ist, vorzugsweise 0,
mit überschüssigem Ammoniak oder einem organischen Amin der allgemeinen Formel (III)

$$RNH[(CH_2)_2NH]_zR \qquad (III),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl, und z gleich 0, 1 oder 2 ist,
und anschließender Trennung sowie Aufarbeitung von Rohprodukt und anfallendem Salz basiert, wobei ein Ammoniumhalogenide und/oder organische Aminhydrohalogenide enthaltender Rückstand anfällt, vorzugsweise ein Rückstand aus der destillativen Aufarbeitung des Rohprodukts,
indem man

- dem besagten Rückstand ein im Wesentlichen unpolares organisches Lösemittel und eine wässrige Lauge zusetzt,
- reagieren lässt, vorzugsweise unter definierter Zeitvorgabe,
- anschließend die wässrige Phase von der organischen Phase trennt,
- aus der organischen Phase das organische Lösemittel entfernt und
- die verbleibende organische Phase gewinnt.

Als halogenfunktionelles Organoalkoxysilan der allgemeinen Formel (II) setzt man vorzugsweise, aber nicht ausschließlich, 3-Chlorpropyltrimethoxysilan, 3-Chlorpropyltriethoxysilan, 3-Chlorpropylmethyldimethoxysilan oder 3-Chlorpropyl-methyldiethoxysilan ein. Man kann aber auch andere Chloralkylalkoxysilane, beispielsweise 3-Chlorpropyldiethylmethoxysilan oder 3-Chlorpropylmethylpropylethoxysilan verwenden.

Weiter kann man bei der Herstellung von organoaminoalkylfunktionellen Alkoxysilanen der allgemeinen Formel (Ia) an Stelle des bereits erwähnten Ammoniaks vorteilhaft ein organisches Amin der allgemeinen Formel (III) beispielsweise, aber nicht ausschließlich, Methylamin, Dimethylamin, Ethylamin, Diethylamin oder Propylamin verwenden.

In besagten Herstellungsverfahren für aminofunktionelle Organosilane bilden sich Rückstände, d. h. Hydrohalogenide bzw. Halogensalze. Der Vorgang kann beispielhaft durch die folgenden Gleichungen erläutert werden:

$$Cl(CH_2)_3Si(OMe)_3 + 2\ NH_3 = H_2N(CH_2)_3Si(OMe)_3 + [NH_4]^+Cl^-$$

$$3\ Cl(CH_2)_3Si(OMe)_3 + 4\ NH_3 = H_2N(CH_2)_3Si(OMe)_3 + [H_2N[(CH_2)_3Si(OMe)_3]_2]^+Cl^- + 2\ [NH_4]^+Cl^-$$

$$4\ Cl(CH_2)_3Si(OMe)_3 + 5\ NH_3 = H_2N(CH_2)_3Si(OMe)_3 + [HN[(CH_2)_3Si(OMe)_3]_3]^+Cl^- + 3\ [NH_4]^+Cl^-$$

Der Rückstand aus der Salzabtrennung des Aminosilanherstellverfahrens kann fest oder flüssig vorliegen und fällt bevorzugt in einer Kristallisationseinheit und/oder bei einer destillativen Aufarbeitung des Rohprodukts an.

Der erfindungsgemäß aufzuarbeitende Rückstand kann optional zunächst mit einem im Wesentlichen unpolaren organischen Lösemittel, vorzugsweise ausgewählt aus der Reihe Hexan, Heptan, Octan, Cyclohexan, insbesondere Toluol sowie weitere unpolare Lösungsmittel und anschließend insbesondere unter guter Durchmischung mit einer wässrigen Lauge, vorzugsweise einer starken Lauge mit eine pH-Wert von mindestens 12, besonders bevorzugt 13 bis 14, versetzt werden. Der pH-Wert kann in einer für den Fachmann an sich bekannten Art und Weise bestimmt werden, z. B. mittels pH-Papier. Als Lauge verwendet man bevorzugt eine NaOH- oder KOH-Lauge.

Die Konzentration der wässrigen Lauge kann so gewählt werden, dass die wässrige Phase nach der Aufarbeitung einen pH-Wert von 12 erreicht. pH-Werte über 12 sind zu bevorzugen. Das Volumen der wässrigen Phase kann durch die während der Aufarbeitung gebildete Menge an NaCl bestimmt werden, und hängt in der Regel vom freien Chloridgehalt des Rohstoffs ab.

Geeigneterweise lässt man die so erhaltene Mischung unter Rühren bis zu 30 Minuten, vorzugsweise 15 Sekunden bis 10 Minuten, besonders bevorzugt 20 Sekunden bis 5 Minuten, ganz besonders bevorzugt 25 Sekunden bis 3 Minuten, insbesondere 30 Sekunden bis 1 Minute, reagieren.

Bevorzugt führt man die Aufarbeitung bei einer Temperatur im Bereich von 5 bis 100 °C, besonders bevorzugt von 10 bis 60 °C und ganz besonders bevorzugt zwischen 20 und 40 °C durch. Dabei arbeitet man bevorzugt in einem beheiz/kühlbaren Rührkessel mit konisch zulaufendem Boden einschließlich Bodenablass und Sichtfenster. Kessel und Rührwerk sind vorzugsweise aus einem nicht rostenden Material, beispielsweise Edelstahl oder emailliertem Stahl.

In der Regel bilden sich schon nach kurzer Ruhezeit zwei Phasen aus, die scharf von einander getrennt vorliegen. Nach der Ausbildung der zwei Phasen kann man die wässrige Phase von der organischen Phase über das Bodenventil des Kessels ablassen und so von der organischen Phase trennen.

Die wässrige Phase enthält in der Regel das bei der Umsetzung gebildete Salz in gelöster Form, bei Einsatz von Natronlauge enthält die wässrige Phase somit beispielsweise gelöstes NaCl. Geeigneterweise sollte die abgetrennte wässrige Phase darüber hinaus noch einen pH-Wert von mindestens 12 aufweisen.

Die organische Phase kann nun in eine weitere Trenneinheit, beispielsweise in eine Destillation, überführt oder über einen Dünnschichtverdampfer bzw. über einen Kurzwegverdampfer gefahren werden. Dort wird bevorzugt das organische Lösemittel, vorzugsweise Toluol, entfernt, geeigneterweise durch Abtrennen unter vermindertem Druck.

Im Sumpf verbleibt die organische Phase, die man zur Gewinnung einer bis- und tris-aminofunktionelle Organosilane enthaltenden Zusammensetzung geeigneterweise filtriert und/oder destilliert. So kann man erfindungsgemäß eine klare, in der Regel farblos, gelb bis tief orange gefärbte, hochwertige bis- und tris-aminofunktionelle Organosilane enthaltenden Zusammensetzung erhalten, die man für viele Anwendungsfälle an Stelle von unverbrückten aminofunktionellen Organosilanen vorteilhaft einsetzen kann.

Man kann die nach dem erfindungsgemäßen Verfahren erhältliche organische Phase aber auch einer Feindestillation unterwerfen, um so die jeweiligen Einzelbestandteile der erfindungsgemäß erhaltenen organischen Phase zu gewinnen.

Insbesondere kann man beim erfindungsgemäßen Verfahren wie folgt vorgehen:

Bevorzugt setzt man

- A) ein halogenfunktionelles Organosilan der allgemeinen Formel (II)

$$X\text{-}Z\text{-}Si(R'')_n(OR')_{3-n} \qquad (II),$$

worin X für Cl, Br oder J steht, Z eine bivalente Alkylgruppe aus der Reihe- $CH_2$-, -$(CH_2)_2$-, -$(CH_2)_3$-, -$(CH_2)_4$- oder -$(CH_2)(CH)CH_3(CH_2)$- darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' für eine lineare oder verzweigte Alkyl-Gruppe mit 1 bis 8 C-Atomen oder eine Aryl-Gruppe steht und n gleich 0, 1, 2 oder 3 ist,

mit überschüssigem Ammoniak oder einem organischen Amin der allgemeinen Formel (III)

$$RNH[(CH_2)_2NH]_zR \qquad (III),$$

worin Gruppen R gleich oder verschieden sind und R für Wasserstoff (H) oder eine lineare oder verzweigte Alkyl-Gruppe mit 1 bis 4 C-Atomen steht, bevorzugt H oder n-Butyl, und z gleich 0, 1 oder 2 ist, unter Druck und Temperaturerhöhung, vorzugsweise bei 10 bis 100 bar und 10 bis 120 °C, in flüssiger Phase um,

- B) trennt anschließend überschüssiges Ammoniak oder organisches Amin ab, beispielsweise durch Abflashen bzw. Destillation, wobei Ammoniumhalogenid oder organisches Aminhydrohalogenid vollständig in der flüssigen Phase gelöst bleibt,

- C) überführt die so erhaltene Flüssigphase in einen Kristallisator, wobei man den Kristallisator auf einer niedrigeren Druckstufe als die vorhergehende Reaktionsstufe betreibt, trennt Ammoniumhalogenid bzw. organisches Aminhydrohalogenid und Rohprodukt,

- D) gewinnt durch Destillation mindestens ein aminofunktionelles Organosilan gemäß Formel (Ia) aus dem Rohprodukt,

- E) setzt dem Rückstand aus der Destillation ein unpolares organisches Lösemittel und eine starke, wässrige Lauge zu, mischt und lässt reagieren, anschließend trennt man die wässrige, salzhaltige Phase von der organischen Phase, destilliert aus der organischen Phase das organische Lösemittel ab und filtriert optional die im Sumpf verbleibende organische Phase zur Gewinnung einer bis- und tris-aminofunktionelle Organosilane, vgl. dazu die Formeln (Ib) und (Ic), enthaltenden Zusammensetzung.

So kann man insbesondere aus dem ansonst zu verwerfenden Rückstand aus der Destillation des Rohprodukts (D) in vorteilhafter Weise eine bis- und tris-silylierte Amine der Formeln (Ib) und (Ic) enthaltende Zusammensetzung mit hoher Wertschöpfung gewinnen.

Bevorzugt führt man das erfindungsgemäße Verfahren bei der Herstellung von 1-Aminomethyltrimethoxysilan, 1-Aminomethyltriethoxysilan, 1-Aminomethyl-methyldimethoxysilan, 1-Aminomethyl-methyldiethoxysilan, 2-Aminoethyltrimethoxy-silan, 2-Aminoethyltriethoxysilan, 3-Aminopropyltrimethoxysilan (AMMO), 3-Aminopropyltriethoxysilan (AMEO), 3-Aminopropylmethyldimethoxysilan, 3-Aminopropylmethyl-diethoxysilan, N-Methyl-3-aminopropyltrimethoxysilan, N-Methyl-3-aminopropyltri-ethoxysilan, N-Butyl-3-aminopropyltrimethoxysilan, 3-Aminopropyldimethylmethoxysilan, 3-Aminopropyldimethylethoxysilan, 3-Aminopropyltrimethylsilan, 3-Amino-2-methylpropyltrimethoxysilan, 3-Amino-2-methylpropyltriethoxysilan, N-[2-Aminoethyl]-3-aminopropyltrimethoxysilan (DAMO), N-[2-Aminoethyl]-3-aminopropyltriethoxysilan, N-[2-Aminoethyl]-3-aminopropyl-methyldimethoxysilan, N-[2-Aminoethyl]-3-amino-propylmethyldiethoxysilan, N,N-Bis[2-Aminoethyl]-3-aminopropyltrimethoxysilan, N,N-Bis[2-Aminoethyl]-3-aminopropyltriethoxysilan, N-[2-Aminoethyl]-N'-[2-Aminoethyl]-3-aminopropyl-trimethoxysilan, N-[2-Aminoethyl]-N'-[2-Aminoethyl]-3-aminopropyltri-ethoxysilan, um nur einige Beispiele zu nennen, vgl. Formel (1a), und entsprechenden bis- und tris-aminofunktionelle Organosilane enthaltenden Zusammensetzungen, d. h. eine Zusammensetzung, die entsprechende bis- und tris-silylierte Amine gemäß den allgemeinen Formeln (Ib) und (Ic) enthält, durch.

Für die bevorzugte Durchführung der zuvor dargelegten Verfahrensschritte, insbesondere der Schritte A bis D, wird zusätzlich auf die Inhalte von EP 1 295 889 A2, EP 1 209 162 A2, DE 101 40 563 A1 und EP 0 849 271 A2 hingewiesen.

Bei der zuvor beschriebenen, bevorzugten Ausführungsform des erfindungsgemäßen Verfahrens kann man im Allgemeinen ein halogenfunktionelles Organosilan der allgemeinen Formel (II) mit überschüssigem Ammoniak oder einem organischen Amin der allgemeinen Formel (III) unter Druck und Temperaturerhöhung in flüssiger Phase umsetzen. Anschließend kann man überschüssiges Ammoniak oder organisches Amin unter Druck abflashen bzw. abdestillieren, wobei das dabei entstandene Ammoniumhalogenid oder organisches Aminhydrohalogenid geeigneterweise vollständig in der flüssigen Phase gelöst bleibt. Die so erhaltene Flüssigphase kann nun beispielsweise in einen Kristallisator überführt werden, wobei man im Kristallisator eine organische oder siliciumorganische Flüssigkeit oder ein Gemisch aus besagten Flüssigkeiten, vorzugsweise Toluol oder Hexan, Heptan, Octan, Cyclohexan oder ein Gemisch daraus, vorlegt und den Kristallisator auf einer niedrigeren Druckstufe als die vorhergehende Reaktionsstufe betreibt. In der Regel destilliert dabei die Restmengen an Ammoniak oder organischem Amin, gegebenenfalls zusätzlich durch temperaturgesteuerte Energiezufuhr, ab. Der Kristallisator kann aber auch gekühlt werden. Das hier im Kristallisator entstandene Ammoniumhalogenid oder organisches Aminhydrohalogenid enthaltende Salz kann man nun vom Rohprodukt abtrennen, beispielsweise durch Filtration, und das reine aminofunktionelle Organosilan aus dem Rohprodukt in an sich bekannter Weise gewinnen. Hierzu führt man in der Regel eine gegebenenfalls fraktionierte Destillation durch, die man unter Normaldruck oder unter vermindertem Druck betreiben kann. Im Falle, dass man ein organisches Amin einsetzt, kann man den Salzrückstand aus dem Kristallisator mit dem Rückstand aus der Destillation vorteilhaft zusammenführen. Anschließend kann man die angefallenen Rückstände einzeln oder gemeinsam erfindungsgemäß aufarbeiten. So kann man zur Gewinnung einer bis- und tris-aminofunktionellen Zusammensetzung in einfacher und wirtschaftlicher Weise dem besagten Rückstand ein im Wesentlichen unpolares organisches Lösemittel und eine starke, wässrige Lauge zusetzen, gegebenenfalls temperieren, mischen und vorzugsweise kontrolliert reagieren lassen. Anschließend kann man die wässrige Phase, die das Salz in vorteilhafter Weise praktisch quantitativ aufgenommen hat, von der organischen Phase abtrennen und entfernt aus der organischen Phase das Lösemittel, vorzugsweise unter vermindertem Druck. Zur Gewinnung einer bis- und tris-aminofunktionelle Organosilane enthaltenden Zusammensetzung, vgl. die allgemeinen Formeln (Ib) und (Ic), kann man ferner die im Sumpf verbleibende organische Phase filtrieren, beispielsweise mittels Filter oder Zentrifuge. Auch dabei kann ein Ammoniumhalogenide bzw. Aminhydrohalogenid enthaltender Rückstand verbleiben, den man vorteilhaft recyclieren und insbesondere mit dem Rückstand aus dem Kristallisator und/oder der Destillation zusammenführen und erfindungsgemäß aufarbeiten kann.

Somit ist eine bis- und tris-aminofunktionelle Organosilane enthaltende Zusammensetzung nach dem erfindungsgemäßen Verfahren erhältlich.

Insbesondere erhält man eine Zusammensetzung mit einem Gehalt von 70 bis 98 Mol-%, vorzugsweise 80 bis 95 Mol-%, besonders vorzugsweise 88 bis 91 Mol-% bis-aminofunktioneller Organosilane, 0 bis 20 Mol-%, vorzugsweise 0,5 bis 15 Mol-%, besonders vorzugsweise 4 bis 8 Mol-%, ganz besonders vorzugsweise 4 bis 6 Mol-% tris-aminofunktioneller Organosilane, 1 bis 20 Mol-%, vorzugsweise 3 bis 15 Mol-%, besonders vorzugsweise 4 bis 6 Mol-% so genannte Disiloxane sowie < 20 Gew.-ppm hydrolysierbares Halogenid, vorzugsweise < 6 Gew.-ppm, bis hin zur Nachweisgrenze, jeweils bezogen auf die gesamte Zusammensetzung. Darüber hinaus kann die Zusammensetzung geringe Mengen an monosilyliertem Amin enthalten, in der Regel 0 bis 10 Mol-%, beispielsweise 0,1, 0,5, 1, 1,5, 2 bis 5 Mol-%, bezogen auf die Zusammensetzung.

Eine solche in einfacher und wirtschaftlicher Weise aus einem Reststoff gewonnene Zusammensetzung mit hoher Wertschöpfung kann nun vorteilhaft als Haftvermittler, als Bestandteil in Beschichtungssystemen, als Bestandteil in Farben und Lacken, als Bohrhilfsmittel, als Mittel oder als Zusatzstoff bei der Gewinnung und Förderung von Erdöl, wie es beispielsweise aus WO 05/124100, WO 05/124099, US 4,498,538, US 4,580,633 sowie US 2004/0177957 A1 hervorgeht, als Mittel oder in einem Mittel zur Verfestigung oder Vernetzung von insbesondere sandreichen Erdschichten, als Bestandteil in Epoxid- sowie Phenolharzen, als Bestandteil in Kunststoffen, als Bestandteil in organisch modifizierten Gläsern, für die Modifizierung von Glas- und Mineralfaseroberflächen, für die Glasfaserverstärkung von Kunststoffen, als Bestandteil in Schlichten und für die Behandlung von Füllstoffen und Pigmenten sowie als Zusatz in Kleb- und Dichtmassen - um nur einige vorteilhafte Anwendungsbeispiele zu nennen - verwendet werden.

Die Ausbeute zur Gewinnung verwertbarer Aminosilane durch die Aufarbeitung besagter Rückständen nach dem erfindungsgemäßen Verfahren liegt in vorteilhafter Weise bei rd. 98% und darüber.

Die vorliegende Erfindung wird durch das nachfolgende Beispiel näher erläutert, ohne den Gegenstand zu beschränken.

**Beispiele:**

**Analytische Method durch direkte potentiografische Titration von hydrolysierbarem Chlorid mit Silbernitrat**:

**Anwendungsbereich**

6 - 1 000 mg/kg

**Chemikalien**

| Wasser | : destilliertes oder deionisiertes Wasser |
|---|---|
| Essigsäure | : z. A., $\geq$ 99,8 % (Eisessig), Haltbarkeit 5 Jahre |
| Ethanol | : vergällt, Haltbarkeit 10 Jahre |
| Silbernitrat | : 0,1 mol/l, Kalibrierlösung, z. B. gebrauchsfertig von Merck, Haltbarkeit: 2 Jahre, nach Anbruch 2 Monate |
| Silbernitrat | : 0,01 mol/l bzw. 0,005 mol/l, Kalibrierlösung, wird durch Verdünnen der Lösung aus 6.4 hergestellt, Haltbarkeit 2 Monate |
| Natriumchlorid | : 0,01 mol/l, Kalibrierlösung, Haltbarkeit: 6 Monate Herstellung der Kalibrierlösung aus einer Ampulle, z. B. Titrisol7 von Merck mit c(NaCl)=0,1 mol/l |

**Geräte und Software**

Bechergläser 150 ml, hohe Form
Meßzylinder 10 ml, 25 ml und 100 ml
Titrationsautomat, z. B. Metrohm 682 mit Silberstab- und Ag/AgCl-Referenzelektrode
Magnetrührwerk und teflonummantelte Rührstäbchen

**Arbeitsvorschrift**

Die entsprechende Probenmenge wird in ein 150-ml-Becherglas gegeben und mit 20 ml Ethanol und 80 ml Essigsäure versetzt. Anschließend wird potentiografisch mit Silbernitrat-Lösung titriert. Mit den gleichen Reagensmengen wird ein Blindwert ermittelt.

**Auswertung**

Der Titroprozessor wird in aller Regel so programmiert, dass nach der Titration direkt der Massenanteil an Chlorid in mg/kg ausgedruckt wird.

Dafür sowie für die manuelle Auswertung gilt folgende Formel:

$$\frac{(V_T - V_{Bl}) \times c_{AgNO3} \times 35{,}5 \times 1\,000}{E} = mg\ Cl^-/kg$$

$V_T$ = Verbrauch an $AgNO_3$-Lösun in ml
$V_{Bl}$ = Ermittelter Blindverbrauch an $AgNO_3$-Lösung in ml
$C_{AgNO3}$ = Konzentration der $AgNO_3$-Lösung in mol/l
35,5 = Molare Masse von Chlorid in g/mol
1 000 = Umrechnungsfaktor in g/kg
E = Einwaage in g

**pH-Wertbestimmung**:

Die Bestimmung von pH-Werten erfolgte mittels pH-Wertindikatorstäbchen (Fa. Merck).

**Beispiel 1 (EJ/V35/06)**

500 g des braunen Rückstands mit einem Chloridgehalt von 7,2 Gew.-% aus dem AMEO-Herstellverfahren gemäß DE 101 40 563 A1 wurden in einer Rührapparatur bei 50°C mit 250 ml Toluol versetzt und auf 25 °C abgekühlt. Anschließend wurde eine NaOH-Lösung (62 g NaOH, 200 g $H_2O$) zugegeben und die Lösung 30 Sekunden intensiv gerührt. Die Phasentrennung erfolgt spontan. Die wässrige Phase wurde abgelassen. Das NaCl war vollständig in der wässrigen Phase gelöst, und es wurde ein pH-Wert von 14 gemessen. Die organische Phase wurde im Vakuum bei 80 °C von Toluol befreit. Das Produkt wurde filtriert.
Erhalten wurde eine klare und gelb-braun gefärbte Flüssigkeit mit einem hydrolysierbaren Chloridgehalt von < 6 Gew.-ppm. Die GC-Analyse mit internem Standard ergab 88 Gew.-% Bis-AMEO, 8,0 Gew.-%. Tris-AMEO. Dem $^{29}$Si-NMR Spektrum konnte ein Disiloxangehalt von 5,6 mol% entnommen werden. Die Ausbeute betrug 95 %. Die Hydrolyse bzw. Kondensation wurde mittels $^{29}$Si-NMR überprüft. Es konnte nur eine geringe Zunahme der M-Strukturen von 4,4 Mol-% auf 5,6 Mol-% festgestellt werden, d. h. während der wässrigen Aufarbeitung trat kaum Hydrolyse und Kondensation ein.

**Beispiel 2 (EJ/V32106)**

500 g des gelben Rückstands mit einem Chloridgehalt von 7,5 Gew.-% aus dem AMEO-Herstellverfahren gemäß DE 101 40 563 A1 wurden in einer Rührapparatur bei 50°C mit 250 ml Toluol versetzt und auf 25 °C abgekühlt. Anschließend wurde eine NaOH-Lösung (62 g NaOH, 150 g $H_2O$) zugegeben und die Lösung 30 Sekunden intensiv gerührt. Die Phasentrennung erfolgte spontan. Die wässrige Phase wurde abgelassen. In der wässrigen Phase befanden sich noch kleine Mengen an festem NaCl und der pH-Wert der wässrigen Phase betrug 14. Die organische Phase wurde im Vakuum bei 80 °C von Toluol befreit. Das Produkt wurde filtriert.
Erhalten wurde eine klare und gelb gefärbte Flüssigkeit mit einem Chloridgehalt von 9,0 Gew.-ppm. Die GC-Analyse mit internem Standard ergab 81,8 Gew.-% Bis-AMEO, 5,7 Gew.-% Tris-AMEO. Dem $^{29}$Si-NMR Spektrum konnte ein Disiloxangehalt von 4 mol% entnommen werden. Die Ausbeute betrug 98 %.

**Beispiel 3 (EJ/V33/06)**

500 g des gelben Rückstands mit einem Chloridgehalt von 7,1 Gew.-% aus dem AMEO-Herstellverfahren gemäß DE 101 40 563 A1 wurden in einer Rührapparatur bei 50°C mit 250 g Toluol versetzt und auf 25 °C abgekühlt. Anschließend wurde eine NaOH-Lösung (25,6 g NaOH, 180 g $H_2O$) zugegeben und die Lösung 30 Sekunden intensiv gerührt. Die Phasentrennung erfolgte spontan. Die wässrige Phase wurde abgelassen. In der wässrigen Phase befanden sich noch kleine Mengen an festem NaCl und der pH-Wert der wässrigen Phase betrug 14. Die organische Phase wurde im Vakuum bei 80 °C von Toluol befreit. Das Produkt wurde filtriert.
Erhalten wurde eine klare und gelb gefärbte Flüssigkeit mit einem Chloridgehalt von < 6,0 Gew.-ppm, Die GC-Analyse mit internem Standard ergab 88,1 Gew.-% Bis-AMEO, 8,0 Gew.-% Tris-AMEO Dem $^{29}$Si-NMR Spektrum konnte ein Disiloxangehalt von 5,3 mol% entnommen werden. Die Ausbeute betrug 96 %.

**Beispiel 4 (EJ/V40/06)**

125 g des gelben Rückstands mit einem Chloridgehalt von 6,1 Gew.-% aus dem AMEO-Herstellverfahren gemäß DE 101 40 563 A1 wurden in einer Rührapparatur bei 50°C mit 31,25 g Toluol versetzt und auf 25 °C abgekühlt. Anschließend wurde eine NaOH-Lösung (15,5 g NaOH, 50 g $H_2O$) zugegeben und die Lösung 30 Sekunden intensiv gerührt. Die Phasentrennung erfolgte spontan. Die wässrige Phase wurde abgelassen. Das entstandene NaCl war vollständig in der wässrigen Phase gelöst und der pH-Wert der wässrigen Phase betrug 14. Die organische Phase wurde im Vakuum bei 80 °C von Toluol befreit, und das Produkt wurde filtriert. Erhalten wurde eine klare und gelb gefärbte Flüssigkeit mit einem hydrolysierbaren Chloridgehalt von 30 Gew.-ppm. Die GC-Analyse mit internem Standard ergab 64,6 Gew.-% Bis-AMEO, 6,6 Gew.-% Tris-AMEO. Dem $^{29}$Si-NMR Spektrum konnte ein Disiloxangehalt von 8,4 mol% entnommen werden. Die Ausbeute betrug 89 %.

**Beispiel 5 (EJ/V76/06)**

546,8 g eines gelben Rückstands bestehend aus AMEO-, Bis-AMEO- und Tris-AMEO-Hydrochlorid mit einem Chloridgehalt von 5,2 Gew.-% wurden in einer Rührapparatur bei 50°C mit 273,4 g Toluol versetzt und auf 25 °C abgekühlt. Anschließend wurde eine NaOH-Lösung (67,8 g NaOH, 219,0 g $H_2O$) zugegeben und die Lösung 30 Sekunden intensiv gerührt. Die Phasentrennung erfolgte spontan. Die wässrige Phase wurde abgelassen. Das entstandene NaCl war vollständig in der wässrigen Phase gelöst und der pH-Wert der wässrigen Phase betrug 14. Die organische Phase wurde im Vakuum bei 80 °C von Toluol befreit. Das Produkt wurde filtriert.
Erhalten wurde eine klare, gelb gefärbte Flüssigkeit mit einem hydrolysierbaren Chloridgehalt von < 6 Gew.-ppm. Die GC-Analyse mit internem Standard ergab 19,0 Gew.-% AMEO, 56,0 Gew.-% Bis-AMEO, 12,0 Gew.-% Tris-AMEO. Dem $^{29}$Si-NMR Spektrum konnte ein Disiloxangehalt von 9,9 mol% entnommen werden. Die Ausbeute betrug 92 %.

**Beispiel 6 (EJ/V80/06)**

286.0 g eines gelben Rückstands bestehend aus AMEO-, Bis-AMEO- und Tris-AMEO-Hydrochlorid mit einem Chloridgehalt von 6,2 Gew.-% wurden in einer Rührapparatur bei 50°C mit 143 g Toluol versetzt und auf 25 °C abgekühlt. Anschließend wurde eine NaOH-Lösung (35,5 g NaOH, 114,6 g $H_2O$) zugegeben und die Lösung 30 Sekunden intensiv gerührt. Die Phasentrennung erfolgte spontan. Die wässrige Phase wurde abgelassen. Das entstandene NaCl war vollständig in der wässrigen Phase gelöst und der pH-Wert der wässrigen Phase betrug 14. Die organische Phase wurde im Vakuum bei 80 °C vom Toluol befreit. Das Produkt wurde filtriert.
Erhalten wurde eine klare, gelb gefärbte Flüssigkeit mit einem hydrolysierbaren Chloridgehalt von 40 Gew.-ppm. Die GC-Analyse mit internem Standard ergab 32,0 Gew.-% AMEO, 46,6 Gew.-% Bis-AMEO, 12,4 Gew.-% Tris-AMEO. Dem $^{29}$Si-NMR Spektrum konnte ein Disiloxangehalt von 8,1 mol% entnommen werden. Die Ausbeute betrug 93 %.

**Beispiel 7 (EJ/V82/06)**

242,1 g eines gelben Rückstands bestehend aus AMEO-, Bis-AMEO- und Tris-AMEO-Hydrochlorid mit einem Chloridgehalt von 7,3 Gew.-% wurden in einer Rührapparatur bei 50°C mit 143,2 g Toluol versetzt und auf 25 °C abgekühlt. Anschließend wurde eine NaOH-Lösung (35,5 g NaOH, 114,6 g $H_2O$) zugegeben und die Lösung 30 Sekunden intensiv gerührt. Die Phasentrennung erfolgte spontan. Die wässrige Phase wurde abgelassen. Das entstandene NaCl war vollständig in der wässrigen Phase gelöst und der pH-Wert der wässrigen Phase betrug 14. Die organische Phase wurde im Vakuum bei 80 °C von Toluol befreit. Das Produkt wurde filtriert.
Erhalten wurde eine klare, gelb gefärbte Flüssigkeit mit einem hydrolysierbaren Chloridgehalt von 9 Gew.-ppm. Die GC-Analyse mit internem Standard ergab 19,4 Gew.-% AMEO, 52,6 Gew.-% Bis-AMEO, 26,5 Gew.-% Tris-AMEO. Dem $^{29}$Si-NMR Spektrum konnte ein Disiloxangehalt von 6,3 mol% entnommen werden. Die Ausbeute betrug 95 %.

**Beispiel 8 (EJ/V91/06)**

125,0 g eines gelben Rückstands bestehend aus Bis-AMMO- und Tris-AMMO-Hydrochlorid mit einem Chloridgehalt von 9,1 Gew.-% wurden in einer Rührapparatur bei 50°C mit 125 g Toluol versetzt und auf 25 °C abgekühlt. Anschließend wurde eine NaOH-Lösung (15,5 g NaOH, 50,0 g $H_2O$) zugegeben und die Lösung 30 Sekunden intensiv gerührt. Die Phasentrennung erfolgte spontan. Die wässrige Phase wurde abgelassen. Das entstandene NaCl war nach einer Zugabe von 10 g H2O vollständig in der wässrigen Phase gelöst und der pH-Wert der wässrigen Phase betrug 14. Die organische Phase wurde im Vakuum bei 80 °C von Toluol befreit. Das erhaltene Produkt wurde filtriert.
Erhalten wurde eine klare, gelb gefärbte Flüssigkeit mit einem hydrolysierbaren Chloridgehalt von < 6 Gew.-ppm. Die GC-Analyse mit internem Standard ergab 81,2 Gew.-% Bis-AMMO, 7,0 Gew.-% Tris-AMMO. Die Ausbeute betrug 90 %.

**Beispiel 9 (EJ/V84/06)**

266,3 g eines gelben Rückstands bestehend aus DAMO-, Bis-DAMO- und Tris-DAMO-Hydrochlorid mit einem Chloridgehalt von 6,6 Gew.-% wurden in einer Rührapparatur bei 50°C mit 155,6 g Cyclohexan versetzt und auf 25 °C abgekühlt. Anschließend wurde eine NaOH-Lösung (33,0 g NaOH, 106,5 g $H_2O$) zugegeben und die Lösung 30 Sekunden intensiv gerührt. Die Phasentrennung erfolgte spontan. Die wässrige Phase wurde abgelassen. Das entstandene NaCl war vollständig in der wässrigen Phase gelöst und der pH-Wert der wässrigen Phase betrug 14. Die organische Phase wurde im Vakuum bei 80 °C vom Cyclohexan befreit. Das Produkt wurde filtriert.
Erhalten wurde eine klare, gelb gefärbte Flüssigkeit mit einem hydrolysierbaren Chloridgehalt von 720 Gew.-ppm. Die GC-Analyse mit internem Standard ergab 23,2 Gew.-% DAMO, 56,2 Gew.-% Bis-DAMO, 5,6 Gew.-% Tris-DAMO. Die Ausbeute betrug 85 %.

**Patentansprüche**

1.  Verfahren zur Aufarbeitung eines Ammoniumhalogenide und/oder organische Aminhydrohalogenide enthaltenden Rückstands aus der Herstellung eines aminofunktionellen Organosilans der allgemeinen Formel (I)

    $$R_2N[(CH_2)_2NH]_z(Z)Si(R'')_n(OR')_{3-n} \qquad (Ia),$$

    worin Gruppen R gleich oder verschieden sind und R für Wasserstoff (H) oder eine lineare oder verzweigte Alkyl-Gruppe mit 1 bis 4 C-Atomen steht, Gruppen R' gleich oder verschieden sind und R' für Wasserstoff (H) oder eine lineare oder verzweigte Alkyl-Gruppe mit 1 bis 8 C-Atomen oder eine Aryl-Gruppe steht, Gruppen R" gleich oder verschieden sind und R" eine lineare oder verzweigte Alkyl-Gruppe mit 1 bis 8 C-Atomen oder eine Aryl-Gruppe darstellt, Z für eine bivalente Alkylgruppe aus der Reihe $-CH_2-$,$-(CH_2)_2-$, $-(CH_2)_3-$, $-(CH_2)_4-$ oder $-(CH_2)(CH)CH_3(CH_2)-$ steht, n gleich 0, 1, 2 oder 3 und z gleich 0, 1 oder 2 sind,
    wobei die Herstellung des aminofunktionellen Organosilans gemäß Formel (Ia) auf der Umsetzung eines halogenfunktionellen Organosilans der allgemeinen Formel (II)

    $$X-Z-Si(R'')_n(OR')_{3-n} \qquad (II),$$

    worin X für Cl, Br oder J steht, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R" gleich oder verschieden sind und R" für eine lineare oder verzweigte Alkyl-Gruppe mit 1 bis 8 C-Atomen oder eine Aryl-Gruppe steht und n gleich 0, 1, 2 oder 3 ist,
    mit überschüssigem Ammoniak oder einem organischen Amin der allgemeinen Formel (III)

    $$RNH[(CH_2)_2NH]_zR \qquad (III),$$

    worin Gruppen R gleich oder verschieden sind und R für Wasserstoff (H) oder eine lineare oder verzweigte Alkyl-Gruppe mit 1 bis 4 C-Atomen steht und z gleich 0, 1 oder 2 ist,
    und anschließender Trennung sowie Aufarbeitung von Rohprodukt und anfallendem salzhaltigem Rückstand basiert, indem man

    - dem Rückstand ein im Wesentlichen unpolares organisches Lösemittel und eine wässrige Lauge zusetzt,
    - reagieren lässt,
    - anschließend die wässrige Phase von der organischen Phase trennt,
    - aus der organischen Phase das organische Lösemittel entfernt und
    - die verbleibende organische Phase gewinnt.

2.  Verfahren nach Anspruch 1,
    **dadurch gekennzeichnet,**
    **dass** man den Ammoniumhalogenide und/oder organische Aminhydrohalogenide enthaltenden Rückstand, wie er bei einer destillativen Aufarbeitung des Rohprodukts anfällt, aufarbeitet.

3.  Verfahren nach einem der Ansprüche 1 oder 2,
    **dadurch gekennzeichnet,**

**dass** man dem Rückstand aus der destillativen Aufarbeitung des Rohprodukts unter Rühren das organische Lösemittel zugibt, weiter eine starke, wässrige Lauge zusetzt, unter guter Durchmischung bis 30 Minuten reagieren und anschließend die Ausbildung von zwei Phasen gewähren lässt.

4. Verfahren nach einem der Ansprüche 1 bis 3,
   **dadurch gekennzeichnet,**
   **dass** man als organisches Lösemittel Toluol einsetzt.

5. Verfahren nach einem der Ansprüche 1 bis 4,
   **dadurch gekennzeichnet,**
   **dass** man als wässrige Lauge eine Natron- oder Kalilauge einsetzt.

6. Verfahren nach den Ansprüchen 1 bis 5,
   **dadurch gekennzeichnet,**
   **dass** man eine wässrige Lauge mit einem pH-Wert von 12 bis 14 einsetzt.

7. Verfahren nach den Ansprüchen 1 bis 6,
   **dadurch gekennzeichnet,**
   **dass** man nach Zugabe der Lauge die so erhaltene Mischung unter Rühren über 10 Sekunden bis zu 30 Minuten reagieren lässt.

8. Verfahren nach einem der Ansprüche 1 bis 7,
   **dadurch gekennzeichnet,**
   **dass** man nach Zugabe der Lauge bei einer Temperatur im Bereich von 5 bis 100 °C reagieren lässt.

9. Verfahren nach den Ansprüchen 1 bis 8,
   **dadurch gekennzeichnet,**
   **dass** man das organische Lösemittel aus der organischen Phase unter vermindertem Druck abdestilliert.

10. Verfahren nach den Ansprüchen 1 bis 9,
    **dadurch gekennzeichnet,**
    **dass** man die nach der Phasentrennung verbleibende organische Phase filtriert.

11. Verfahren nach den Ansprüchen 1 bis 10,
    indem man

    - A) ein halogenfunktionelles Organosilan der allgemeinen Formel (II)

    $$X\text{-}Z\text{-}Si(R'')_n(OR')_{3-n} \qquad (II),$$

    worin X für Cl, Br oder J steht, Z eine bivalente Alkylgruppe aus der Reihe $-CH_2-$, $-(CH_2)_2-$, $-(CH_2)_3-$, $-(CH_2)_4-$ oder $-(CH_2)(CH)CH_3(CH_2)-$ darstellt, Gruppen R' gleich oder verschieden sind und R' für ein Wasserstoff (H) oder eine lineare oder verzweigte Alkyl-Gruppe mit 1 bis 8 C-Atomen oder eine Aryl-Gruppe steht, Gruppen R'' gleich oder verschieden sind und R'' für eine lineare oder verzweigte Alkyl-Gruppe mit 1 bis 8 C-Atomen oder eine Aryl-Gruppe steht und n gleich 0, 1, 2 oder 3 ist,
    mit überschüssigem Ammoniak oder einem organischen Amin der allgemeinen Formel (III)

    $$RNH[(CH_2)_2NH]_zR \qquad (III),$$

    worin Gruppen R gleich oder verschieden sind und R für Wasserstoff (H) oder eine lineare oder verzweigte Alkyl-Gruppe mit 1 bis 4 C-Atomen steht und z gleich 0, 1 oder 2 ist,
    unter Druck und Temperaturerhöhung in flüssiger Phase umsetzt,
    - B) anschließend überschüssiges Ammoniak oder organisches Amin abtrennt und dabei Ammoniumhalogenid oder organisches Aminhydrohalogenid vollständig in der flüssigen Phase gelöst bleibt,
    - C) die so erhaltene Flüssigphase in einen Kristallisator überführt, wobei man den Kristallisator auf einer niedrigeren Druckstufe als die vorhergehende Reaktionsstufe betreibt, Ammoniumhalogenid bzw. organisches Aminhydrohalogenid und Rohprodukt trennt,
    - D) durch Destillation mindestens ein aminofunktionelles Organosilan gemäß Formel (Ia) aus dem Rohprodukt gewinnt
und
- E) dem Rückstand aus der Destillation ein unpolares organisches Lösemittel und eine starke, wässrige Lauge zusetzt, mischt und reagieren lässt, anschließend die wässrige, salzhaltige Phase von der organischen Phase trennt, aus der organischen Phase das organische Lösemittel abdestilliert, optional die im Sumpf verbleibende organische Phase filtriert und das Produkt gewinnt.

**Claims**

1. A process for working up a residue containing ammonium halides and/or organic amine hydrohalides from the preparation of an amino-functional organosilane of the general formula (I)

$$R_2N[(CH_2)_2NH]_z(Z)Si(R'')_n(OR')_{3-n} \qquad (Ia)$$

in which R groups are the same or different and R is hydrogen (H) or a linear or branched alkyl group having 1 to 4 carbon atoms, R' groups are the same or different and R' is hydrogen (H) or a linear or branched alkyl group having 1 to 8 carbon atoms or an aryl group, R'' groups are the same or different and R'' is a linear or branched alkyl group having 1 to 8 carbon atoms or an aryl group, Z is a bivalent alkyl group from the group of $-CH_2-$, $-(CH_2)_2-$, $-(CH_2)_3-$, $-(CH_2)_4-$ or $- (CH_2)(CH) CH_3(CH_2)-$, n is 0, 1, 2 or 3 and z is 0, 1 or 2,
wherein the preparation of the amino-functional organosilane of the formula (Ia) is based on the reaction of a halogen-functional organosilane of the general formula (II)

$$X-Z-Si(R'')_n(OR')_{3-n} \qquad (II)$$

in which X is Cl, Br or I, Z is a bivalent alkyl group from the group of $-CH_2-$, $-(CH_2)_2-$, $-(CH_2)_3-$, $-(CH_2)_4-$ or $-(CH_2)(CH)CH_3(CH_2)-$, R' groups are the same or different and R' is a hydrogen (H) or a linear or branched alkyl group having 1 to 8 carbon atoms or an aryl group, R'' groups are the same or different and R'' is a linear or branched alkyl group having 1 to 8 carbon atoms or an aryl group, and n is 0, 1, 2 or 3,
with excess ammonia or an organic amine of the general formula (III)

$$RNH [(CH_2)_2NH]_zR \qquad (III)$$

in which R groups are the same or different and R is hydrogen (H) or a linear or branched alkyl group having 1 to 4 carbon atoms, and z is 0, 1 or 2,
and subsequent separation and workup of crude product and salt-containing residue obtained,
by

- adding an essentially nonpolar organic solvent and an aqueous alkali to the residue,
- allowing them to react,
- then separating the aqueous phase from the organic phase, and
- removing the organic solvent from the organic phase
- to obtain the remaining organic phase.

2. A process according to claim 1,
**characterized in that**,
the residue containing ammonium halides and/or organic amine hydrohalides as obtained in a distillative workup of the crude product is worked up.

3. A process according to either of claims 1 and 2,
**characterized in that**,
the organic solvent is added to the residue from the distillative workup of the crude product while stirring, a strong aqueous alkali is additionally added, and the mixture is allowed to react with good mixing for 30 minutes to subsequently form two phases.

4. A process according to any one of claims 1 to 3,
**characterized in that**,
the organic solvent used is toluene.

**5.** A process according to any one of claims 1 to 4,
**characterized in that**,
the aqueous alkali used is a sodium hydroxide solution or potassium hydroxide solution.

**6.** A process according to any of claims 1 to 5,
**characterized in that**,
an aqueous alkali with a pH of 12 to 14 is used.

**7.** A process according to claims 1 to 6,
**characterized in that**,
after addition of the alkali, the mixture thus obtained is allowed to react while stirring over 10 seconds up to 30 minutes.

**8.** A process according to any one of claims 1 to 7,
**characterized in that**,
after addition of the alkali, the mixture is allowed to react at a temperature in the range from 5 to 100°C.

**9.** A process according to any of claims 1 to 8,
**characterized in that**,
the organic solvent is distilled out of the organic phase under reduced pressure.

**10.** A process according to any of claims 1 to 9,
**characterized in that**,
the organic phase remaining after the phase separation is filtered.

**11.** A process according to any of claims 1 to 10, by

- A) reacting a halogen-functional organosilane of the general formula (II)

$$X\text{-}Z\text{-}Si(R'')_n(OR'')_{3-n} \qquad (II)$$

in which X is Cl, Br or I, Z is a bivalent alkyl group from the group of $-CH_2-$, $-(CH_2)_2-$, $-(CH_2)_3-$, $-(CH_2)_4-$ or $-(CH_2)(CH)CH_3(CH_2)-$, R' groups are the same or different and R' is a hydrogen (H) or a linear or branched alkyl group having 1 to 8 carbon atoms or an aryl group, R'' groups are the same or different and R'' is a linear or branched alkyl group having 1 to 8 carbon atoms or an aryl group, and n is 0, 1, 2 or 3,
with excess ammonia or an organic amine of the general formula (III)

$$RNH\,[(CH_2)_2NH_zR \qquad (III)$$

in which R groups are the same or different and R is hydrogen (H) or a linear or branched alkyl group having 1 to 4 carbon atoms, and z is 0, 1 or 2,
under pressure and with a temperature increase in the liquid phase,
- B) then removing excess ammonia or organic amine to leave ammonium halide or organic amine hydrohalide dissolved fully in the liquid phase,
- C) transferring the liquid phase thus obtained to a crystallizer,
the crystallizer being operated at a lower pressure level than the preceding reaction stage, and ammonium halide or organic amine hydrohalide and crude product are separated,
- D) distilling to obtain at least one amino-functional organosilane of the formula (Ia) from the crude product and
- E) adding a nonpolar organic solvent and a strong aqueous alkali to the residue from the distillation, and mixing and allowing them to react, then separating the aqueous salt-containing phase from the organic phase, distilling the organic solvent out of the organic phase, and optionally filtering the organic phase remaining in the bottoms to obtain the product.

**Revendications**

**1.** Procédé pour le traitement d'un résidu contenant des halogénures d'ammonium et/ou des hydrohalogénures d'amine organique provenant de la préparation d'un organosilane aminofonctionnel de formule générale (I)

$$R_2N[(CH_2)_2NH]_z(Z)Si(R'')_n(OR')_{3-n} \qquad (Ia),$$

dans laquelle les groupes R sont identiques ou différents et R représente hydrogène (H) ou un groupe alkyle linéaire ou ramifié comprenant 1 à 4 atomes de carbone, les groupes R' sont identiques ou différents et R' représente hydrogène (H) ou un groupe alkyle linéaire ou ramifié comprenant 1 à 8 atomes de carbone ou un groupe aryle, les groupes R'' sont identiques ou différents et R'' représente un groupe alkyle linéaire ou ramifié comprenant 1 à 8 atomes de carbone ou un groupe aryle, Z représente un groupe alkyle divalent de la série $-CH_2-$, $-(CH_2)_2-$, $-(CH_2)_3-$, $-(CH_2)_4-$ ou $-(CH_2)(CH)CH_3(CH_2)-$, n vaut 0, 1, 2 ou 3 et z vaut 0, 1 ou 2, la préparation de l'organosilane aminofonctionnel selon la formule (Ia) étant basée sur la transformation d'un organosilane à fonctionnalité halogène de formule générale (II)

$$X-Z-Si(R'')_n(OR')_{3-n} \qquad (II),$$

dans laquelle X représente Cl, Br ou I, Z représente un groupe alkyle divalent de la série $-CH_2-$, $-(CH_2)_2-$, $-(CH_2)_3-$, $-(CH_2)_4-$ ou $-(CH_2)(CH)CH_3(CH_2)-$, les groupes R' sont identiques ou différents et R' représente hydrogène (H) ou un groupe alkyle linéaire ou ramifié comprenant 1 à 8 atomes de carbone ou un groupe aryle, les groupes R'' sont identiques ou différents et R'' représente un groupe alkyle linéaire ou ramifié comprenant 1 à 8 atomes de carbone ou un groupe aryle et n vaut 0, 1, 2 ou 3, avec de l'ammoniac en excès ou avec une amine organique de formule générale (III)

$$RNH[(CH_2)_2NH]_zR \qquad (III),$$

dans laquelle les groupes R sont identiques ou différents et R représente hydrogène (H) ou un groupe alkyle linéaire ou ramifié comprenant 1 à 4 atomes de carbone et z vaut 0, 1 ou 2, et sur une séparation consécutive ainsi que sur un traitement du produit brut et du résidu contenant un sel produit, en ce qu'on

- ajoute au résidu un solvant organique essentiellement non polaire et une lessive aqueuse,
- laisse réagir,
- sépare ensuite la phase aqueuse de la phase organique,
- élimine le solvant organique de la phase organique et
- obtient la phase organique qui reste.

2.  Procédé selon la revendication 1, **caractérisé en ce qu'**on traite le résidu contenant des halogénures d'ammonium et/ou des hydrohalogénures d'amine organique tel qu'il est obtenu lors d'un traitement par distillation du produit brut.

3.  Procédé selon l'une quelconque des revendications 1 ou 2, **caractérisé en ce qu'**on ajoute au résidu provenant du traitement par distillation du produit brut, sous agitation, le solvant organique, on ajoute en outre une lessive forte, aqueuse, on laisse réagir sous bonne agitation pendant 30 minutes et on laisse ensuite se produire la formation de deux phases.

4.  Procédé selon l'une quelconque des revendications 1 à 3, **caractérisé en ce qu'**on utilise du toluène comme solvant organique.

5.  Procédé selon l'une quelconque des revendications 1 à 4, **caractérisé en ce qu'**on utilise, comme lessive aqueuse, une lessive de sodium ou de potassium.

6.  Procédé selon les revendications 1 à 5, **caractérisé en ce qu'**on utilise une lessive aqueuse présentant une valeur de pH de 12 à 14.

7.  Procédé selon les revendications 1 à 6, **caractérisé en ce qu'**on laisse réagir le mélange obtenu après addition de la lessive sous agitation pendant 10 secondes jusqu'à 30 minutes.

8.  Procédé selon l'une quelconque des revendications 1 à 7, **caractérisé en ce qu'**on laisse réagir après addition de la lessive à une température dans la plage de 5 à 100°C.

9.  Procédé selon les revendications 1 à 8, **caractérisé en ce qu'**on élimine le solvant organique de la phase organique par distillation sous pression réduite.

10. Procédé selon les revendications 1 à 9, **caractérisé en ce qu'**on filtre la phase organique qui reste après la séparation des phases.

11. Procédé selon les revendications 1 à 10, **caractérisé en ce qu'**on

- A) transforme un organosilane à fonctionnalité halogène de formule générale (II)

$$X-Z-Si(R'')_n(OR')_{3-n} \qquad (II),$$

dans laquelle X représente Cl, Br ou I, Z représente un groupe alkyle divalent de la série $-CH_2-$, $-(CH_2)_2-$, $-(CH_2)_3-$, $-(CH_2)_4-$ ou $-(CH_2)(CH)$ $CH_3(CH_2)-$, les groupes R' sont identiques ou différents et R' représente hydrogène (H) ou un groupe alkyle linéaire ou ramifié comprenant 1 à 8 atomes de carbone ou un groupe aryle, les groupes R'' sont identiques ou différents et R'' représente un groupe alkyle linéaire ou ramifié comprenant 1 à 8 atomes de carbone ou un groupe aryle et n vaut 0, 1, 2 ou 3,
avec de l'ammoniac en excès ou avec une amine organique de formule générale (III)

$$RNH[(CH_2)_2NH]_zR \qquad (III),$$

dans laquelle les groupes R sont identiques ou différents et R représente hydrogène (H) ou un groupe alkyle linéaire ou ramifié comprenant 1 à 4 atomes de carbone et z vaut 0, 1 ou 2,
sous pression et augmentation de la température en phase liquide,
- B) sépare ensuite l'ammoniac ou l'amine organique en excès, l'halogénure d'ammonium ou l'hydrohalogénure d'amine organique restant totalement sous forme dissoute dans la phase liquide,
- C) transfère la phase liquide ainsi obtenue dans un cristalliseur,
le cristalliseur étant exploité à un niveau de pression plus bas que l'étage de réaction précédent, l'halogénure d'ammonium ou l'hydrohalogénure d'amine organique et le produit brut se séparant,
- D) obtient, par distillation, au moins un organosilane aminofonctionnel selon la formule (Ia) à partir du produit brut et
- E) ajoute au résidu de la distillation un solvant organique non polaire et une lessive forte, aqueuse, mélange et laisse réagir, sépare ensuite la phase aqueuse contenant un sel de la phase organique, élimine, par distillation, le solvant organique de la phase organique, filtre éventuellement la phase organique qui reste dans le fond et obtient le produit.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE PS1023462 C
- DE PS2749316 C
- DE PS2753124 C
- EP 0702017 A2
- EP 0741137 A2
- EP 0849271 A2
- EP 1295889 A2
- EP 1262484 A2

- EP 1209162 A2
- DE 10140563 A1
- WO 05124100 A
- WO 05124099 A
- US 4498538 A
- US 4580633 A
- US 20040177957 A1